# DEMANDE DE BREVET EUROPEEN

(11) **EP 4 016 819 A1**
(43) Date de publication de la demande: **22.06.2022**
(21) Numéro de dépôt: 21213958.8
(22) Date de dépôt: 13.12.2021
(51) Int. Cl.: H02K 15/03, H02K 15/12, H02K 1/276

(54) **ROTOR DE MACHINE ELECTRIQUE TOURNANTE ET MACHINE ELECTRIQUE TOURNANTE EQUIPEE D'UN TEL ROTOR**

(30) Priorité: 17.12.2020 FR 2013585
(71) Demandeur: VALEO EQUIPEMENTS ELECTRIQUES MOTEUR, 94046 Créteil Cedex (FR)
(72) Inventeur: EL GHAZAL, Mohamed, 62630 Étaples-sur-Mer (FR); ODIN, Laurent, 38070 St Quentin Fallavier (FR); DELIANNE, Henri, 62630 Étaples-sur-Mer (FR); SEGARD, Pierre, 62630 Étaples-sur-Mer (FR); JOZEFOWIEZ, Eric, 62630 Étaples-sur-Mer (FR); MARGUERITTE, David, 62630 Étaples-sur-Mer (FR); PERREAUT, Sylvain, 62630 Étaples-sur-Mer (FR)
(74) Mandataire: Valeo Powertrain Systems

(57) **Abrégé**

L'invention porte sur un rotor (3) pour machine électrique tournante (1), le rotor (3) comprenant :
- un corps de rotor (16) comprenant des premières cavités (23) s'étendant d'une première extrémité (24) du corps de rotor (16) à une deuxième extrémité (25) du corps de rotor (16),
- des aimants permanents (26) se logeant dans les premières cavités (23), un espace de fixation (29) étant formé entre au moins une première face (28) d'au moins un des aimants permanents (26) et une deuxième face (27) de l'une des premières cavités (23) dans laquelle l'au moins un aimant permanents (26) est logé,
- un premier ensemble de maintien (15) en appui sur la première extrémité (24) du corps de rotor (16),
- une résine insérée dans l'espace de fixation (29),
le premier ensemble de maintien (15) comprenant :
- un passage d'alimentation (18) communiquant avec l'espace de fixation (29), le passage d'alimentation (18) étant apte à recevoir un dispositif d'alimentation en résine,
- un évent (32) communiquant avec l'espace de fixation (29) et apte à permettre l'évacuation d'un gaz lors de l'insertion de la résine,
le passage d'alimentation (18) et l'évent (32) étant distincts.

L'invention porte également sur une machine électrique tournante équipée d'un tel rotor.

## Description

L'invention porte sur un rotor de machine électrique tournante comprenant des aimants permanents fixés à l'aide d'une résine. L'invention porte également sur une machine électrique tournante équipée d'un tel rotor.

Il est connu de la demande de brevet japonais JP2014222964A2 un rotor pour machine électrique tournante, apte à interagir avec un stator de la machine électrique tournante et en rotation par rapport à un axe de rotation, le rotor comprenant :
- un corps de rotor comprenant des premières cavités s'étendant d'une première extrémité du corps de rotor à une deuxième extrémité du corps de rotor dans la direction de l'axe de rotation,
- des aimants permanents se logeant dans les premières cavités, un espace de fixation étant formé entre au moins une première face d'au moins un des aimants permanents et une deuxième face de la première cavité dans laquelle il est logé,
- une résine insérée dans l'espace de fixation,

Dans ce type de rotor, des bulles risques de se former dans la résine lors du remplissage de la résine dans l'espace de fixation. Ces bulles entrainent une mauvaise fixation des aimants permanents. Cette mauvaise fixation des aimants entraine des difficultés d'équilibrage du rotor dues à des mouvements non maitrisés des aimants permanents lors de l'opération d'équilibrage. Pour réduire le nombre de bulles un temps de cycle important est nécessaire pour laisser les bulles remonter en surface de la résine. Ce temps de cycle important entraine des surcoûts importants. De plus les bulles remontées en surface entrainent un mauvais remplissage de l'espace de fixation.

La présente invention vise à résoudre tout ou partie de ces inconvénients.

L'invention porte sur un rotor pour machine électrique tournante, apte à interagir avec un stator de la machine électrique tournante et en rotation par rapport à un axe de rotation, le rotor comprenant :
- un corps de rotor comprenant des premières cavités s'étendant d'une première extrémité du corps de rotor à une deuxième extrémité du corps de rotor dans la direction de l'axe de rotation,
- des aimants permanents se logeant dans les premières cavités, un espace de fixation étant formé entre au moins une première face d'au moins un des aimants permanents et une deuxième face de la première cavité dans laquelle l'au moins un aimant permanent est logé,
- un premier ensemble de maintien en appui sur la première extrémité du corps de rotor,
- une résine insérée dans l'espace de fixation,
le premier ensemble de maintien comprenant :
- un passage d'alimentation communiquant avec l'espace de fixation, le passage d'alimentation étant apte à recevoir un dispositif d'alimentation en résine,
- un évent communiquant avec l'espace de fixation et apte à permettre l'évacuation d'un gaz lors de l'insertion de la résine,
le passage d'alimentation et l'évent étant distincts.

L'utilisation d'un tel évent permet de faciliter le remplissage de la résine dans l'espace de fixation en facilitant l'évacuation du gaz, notamment de l'air atmosphérique, occupant l'espace de fixation avant l'insertion de la résine. La formation de bulle dans la résine est également réduite. La fixation des aimants permanents est ainsi améliorée. Les aimants permanents étant bien fixés, l'équilibrage du rotor est facilité.

Selon une caractéristique supplémentaire de l'invention, l'évent comprend un premier passage formé dans le premier ensemble de maintien, une première extrémité du premier passage débouchant dans l'espace de fixation.

L'utilisation d'un tel premier passage permet de déporter l'évacuation du gaz par rapport à l'espace de fixation. Il est ainsi par exemple possible d'évacuer le gaz sur un rayon radialement plus à l'intérieur que l'espace de fixation. Une telle position permet par exemple d'utiliser la zone radialement extérieure à l'évacuation pour d'autres fonction comme pour le maintien du premier ensemble de maintien sur le corps de rotor.

Selon une caractéristique supplémentaire de l'invention, le corps de rotor comprend une deuxième cavité et le premier passage comprend une deuxième extrémité débouchant dans la deuxième cavité.

Une telle deuxième cavité peut permettre d'alléger le rotor tout en réduisant les fuites magnétiques dans le corps de rotor. De plus l'utilisation de cette deuxième cavité dans l'évacuation du gaz lors de l'insertion de la résine permet de décaler cette évacuation sans avoir besoin de prolonger le premier passage. Il est ainsi possible de limiter la réduction de la résistance mécanique du premier ensemble de maintien due au premier passage.

Selon une caractéristique supplémentaire de l'invention, l'évent comprend un premier trou traversant le premier ensemble de maintien.

La réalisation d'un premier trou dans le premier ensemble de maintien permet l'évacuation du gaz à travers le premier ensemble de maintien lors de l'insertion de la résine.

Selon une caractéristique supplémentaire de l'invention, le premier trou débouche dans la deuxième cavité.

Une telle position pour le premier trou permet de faciliter l'évacuation du gaz. En effet le gaz arrivé dans la deuxième cavité par la deuxième extrémité du premier passage peut sortir du rotor par le premier trou.

L'invention porte sur un rotor pour machine électrique tournante, apte à interagir avec un stator de la machine électrique tournante et en rotation par rapport à un axe de rotation, le rotor comprenant :
- un corps de rotor comprenant des premières cavités s'étendant d'une première extrémité du corps de rotor à une deuxième extrémité du corps de rotor dans la direction de l'axe de rotation,
- des aimants permanents se logeant dans les premières cavités, un espace de fixation étant formé entre au moins une première face d'au moins un des aimants permanents et une deuxième face de la première cavité dans laquelle l'au moins un aimant permanent est logé,
- un premier ensemble de maintien en appui sur la première extrémité du corps de rotor,
- une résine insérée dans l'espace de fixation,
le premier ensemble de maintien comprenant :
- un passage d'alimentation communiquant avec l'espace de fixation, le passage d'alimentation étant apte à recevoir un dispositif d'alimentation en résine,
- un évent communiquant avec l'espace de fixation et apte à permettre l'évacuation d'un gaz lors de l'insertion de la résine,
le passage d'alimentation et l'évent étant distincts,
le corps de rotor comprenant une deuxième cavité et le premier passage comprenant une deuxième extrémité débouchant dans la deuxième cavité,
l'évent comprenant un premier trou traversant le premier ensemble de maintien,
le premier trou débouchant dans la deuxième cavité.

Selon une caractéristique supplémentaire de l'invention, le premier passage comprend une première gorge formée dans le premier ensemble de maintien.

L'utilisation d'une telle première gorge dans le premier ensemble de maintien permet de limiter le nombre de pièces du premier ensemble de maintien. Le premier ensemble de maintien comprend par exemple une seule pièce dans laquelle la première gorge est formée.

Selon une caractéristique supplémentaire de l'invention, le premier ensemble de maintien comprend une première partie d'extrémité et une première partie intermédiaire de forme plate, notamment réalisée dans une tôle, serrée entre la première partie d'extrémité et le corps de rotor, le premier passage comprenant une première ouverture, notamment réalisée par découpe, traversant une épaisseur de la première partie intermédiaire.

L'utilisation d'une telle première partie intermédiaire permet de réduire les usinages dans la première partie d'extrémité.

Selon une caractéristique supplémentaire de l'invention, l'évent communique avec plusieurs espaces de fixation.

L'utilisation d'évents communiquant avec plusieurs espaces de fixation permet de réduire le nombre d'évents. La fabrication du premier ensemble de maintien est ainsi simplifiée. De tels évents permettent également de réduire l'encombrement des évents et donc de limiter l'encombrement du rotor.

Selon une caractéristique supplémentaire de l'invention, le rotor comprend un deuxième ensemble de maintien en appui sur la deuxième extrémité du corps de rotor, le premier ensemble de maintien et le deuxième ensemble de maintien enserrant le corps de rotor entre, respectivement, la première extrémité du corps de rotor et la deuxième extrémité du corps de rotor.

L'utilisation d'un deuxième ensemble de maintien en plus de premier ensemble de maintien permet d'améliorer le maintien des différentes pièces du rotor ensemble.

Selon une caractéristique supplémentaire de l'invention, l'espace de fixation comprend un premier logement et un deuxième logement, le deuxième ensemble de maintien comprenant un deuxième passage reliant le premier logement et le deuxième logement.

L'utilisation d'un premier logement et d'un deuxième logement permet une meilleure fixation des aimants permanents par la résine. En effet grâce à ces deux logement l'aimants permanent est fixé au corps de rotor par la résine sur au moins deux zones. De plus le premier logement et le deuxième logement étant rempli d'une résine amagnétique, ils peuvent avoir une fonction de canalisation des flux magnétiques en limitant les fuites magnétiques dans le rotor. Une augmentation des performances de la machine électrique est alors possible. Un tel deuxième passage permet de faciliter le passage du gaz et de la résine du premier logement au deuxième logement. Un remplissage plus rapide de l'espace de fixation est ainsi possible. Le coût de fabrication du rotor peut alors être réduit.

Selon une caractéristique supplémentaire de l'invention, le passage d'alimentation communique avec le premier logement et l'évent communique avec le deuxième logement.

Une telle disposition permet d'améliorer le flux de la résine lors de son insertion dans l'espace de fixation.

Selon une caractéristique supplémentaire, le deuxième passage comprend une deuxième gorge formée dans le deuxième ensemble de maintien.

L'utilisation d'une telle deuxième gorge dans le deuxième ensemble de maintien permet de limiter le nombre de pièces du deuxième ensemble de maintien. Le deuxième ensemble de maintien comprend par exemple une seule pièce dans laquelle la deuxième gorge est formée.

Selon une caractéristique supplémentaire de l'invention, le deuxième ensemble de maintien comprend une deuxième partie d'extrémité et une deuxième partie intermédiaire de forme plate, notamment réalisée dans une tôle, serrée entre la deuxième partie d'extrémité et le corps de rotor, le deuxième passage comprenant une deuxième ouverture, notamment réalisée par découpe, traversant une épaisseur de la deuxième partie intermédiaire.

L'utilisation d'une telle deuxième partie intermédiaire permet de réduire les usinages dans la deuxième partie d'extrémité.

Selon une caractéristique supplémentaire de l'invention, le passage d'alimentation communique avec plusieurs espaces de fixations, notamment deux.

L'utilisation d'un tel passage d'alimentation permet l'utilisation d'un passage plus large et permet donc de faciliter le flux de la résine lors de son insertion. En effet il est ainsi possible de supprimer des séparations entre les passages d'alimentation et donc d'avoir des passages alimentation plus gros sans augmenter l'encombrement global des passages d'alimentation dans le premier ensemble de maintien.

Selon une caractéristique supplémentaire de l'invention, les premières cavités et les aimants permanents ont la direction de l'axe de rotation.

Selon une caractéristique supplémentaire de l'invention, le corps de rotor comprend des troisièmes cavités ayant un axe parallèle à l'axe de rotation et s'étendant entre un premier rayon et un deuxième rayon, le premier rayon étant inférieur au deuxième rayon,
le rotor comprenant des tirants, notamment des vis, passant dans les troisièmes cavités et dans des deuxièmes trous du premier ensemble de maintien, permettant d'enserrer le corps de rotor entre le premier ensemble de maintien et le deuxième ensemble de maintien,
le passage d'alimentation étant situé radialement à l'intérieur du premier rayon ou à l'extérieur du deuxième rayon.

Une telle disposition permet une meilleure résistance mécanique du rotor. En effet grâce à cette disposition le passage d'alimentation est éloignés de la zone d'installation de tirant qui permettent le maintien du premier ensemble de maintien, du deuxième ensemble de maintien et du corps de rotor ensemble. Il est ainsi par exemple possible d'utiliser plus de tirant ou des tirants des taille plus importante.

Selon une caractéristique supplémentaire de l'invention, le premier trou est situé radialement à l'intérieur du premier rayon ou à l'extérieur du deuxième rayon.

Une telle disposition permet une meilleure résistance mécanique du rotor. En effet grâce à cette disposition, le premier trou est éloigné de la zone d'installation de tirant qui permettent le maintien du premier ensemble de maintien, du deuxième ensemble de maintien et du corps de rotor ensemble. Il est ainsi par exemple possible d'utiliser plus de tirant ou des tirants des taille plus importante. L'invention porte également sur une machine électrique tournante comprenant un rotor tel que décrit précédemment et un stator.

Dans tout ce qui précède, le rotor peut comprendre un nombre de paires de pôles quelconque, par exemple six ou huit paires de pôles.

Dans tout ce qui précède, la machine électrique tournante peut avoir un stator ayant un bobinage électrique polyphasé, par exemple formé par des fils ou par des barres conductrices reliées les unes les autres.

La machine électrique tournante peut comprendre un composant électronique de puissance, apte à être connecté au réseau de bord d'un véhicule. Ce composant électronique de puissance comprend par exemple un onduleur/redresseur permettant, selon que la machine électrique tournante fonctionne en moteur ou en génératrice, de charger un réseau de bord du véhicule ou d'être électriquement alimenté depuis ce réseau.

La machine électrique tournante peut encore comprendre une poulie ou tout autre moyen de liaison vers le reste d'un groupe motopropulseur du véhicule. La machine électrique tournante est par exemple reliée, notamment via une courroie, au vilebrequin d'un moteur thermique du véhicule. En variante, la machine électrique tournante est reliée à d'autres emplacement du groupe motopropulseur, par exemple à l'entrée d'une boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule, ou encore sur le train avant ou le train arrière de ce groupe motopropulseur.

L'invention pourra être mieux comprise à la lecture de la description qui va suivre d'exemples non limitatifs de mise en oeuvre de celle-ci et à l'examen du dessin annexé sur lequel :
- la figure 1 représente une vue partielle schématique en coupe d'une machine électrique tournante,
- la figure 2 représente une vue schématique d'un rotor de machine électrique tournante selon un premier mode de réalisation de l'invention,
- la figure 3 représente une vue partielle schématique du rotor de la figure 2,
- la figure 4 représente un détail de la vue de la figure 3,
- la figure 5 représente une vue schématique d'un premier ensemble de maintien du rotor de la figure 2,
- la figure 6 représente une vue schématique d'un deuxième ensemble de maintien du rotor de la figure 2,
- la figure 7 représente un détail d'une vue selon un plan perpendiculaire à un axe de rotation du rotor de la figure 2,
- la figure 8 représente une vue partielle en coupe du rotor de la figure 2,
- la figure 9 représente une vue partielle en coupe d'un rotor selon un deuxième mode de réalisation.

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

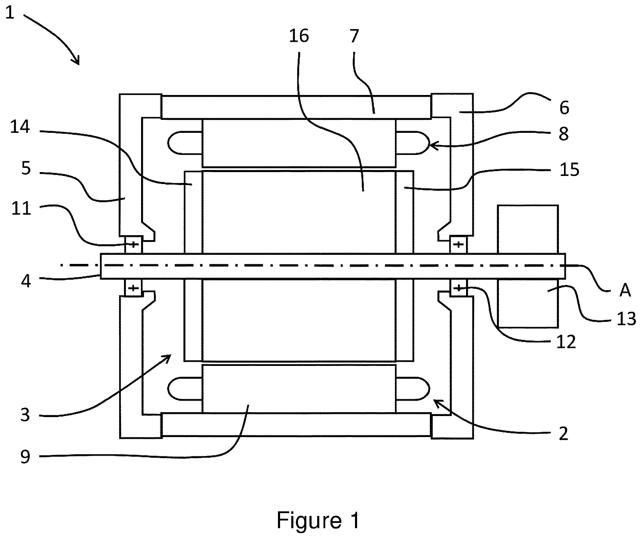

La figure 1 représente une vue partielle schématique en coupe d'une machine électrique tournante 1 ayant un axe de rotation A. La machine électrique tournante 1 comprend un stator 2 et un rotor 3 dans un carter. Le rotor 3 est apte à interagir avec le stator 2. Le carter comprend par exemple un premier palier 5, un deuxième palier 6 et une entretoise tubulaire 7. L'entretoise tubulaire 7 est par exemple enserrée entre le premier palier 5 et le deuxième palier 6, par exemple grâce à des tirants non représentés entre le premier palier 5 et le deuxième palier 6. Le stator est fixé à l'intérieur du carter, par exemple monté serré dans l'entretoise tubulaire 7.

Au sens de l'invention, sauf en cas de précision contraire, les termes radial et radialement s'entendent par rapport à l'axe de rotation A. Au sens de l'invention, sauf en cas de précision contraire, les termes longitudinal et longitudinalement signifient dans la direction de l'axe de rotation A.

Dans un mode de réalisation non représenté de l'invention, l'entretoise tubulaire comprend une chambre de refroidissement dans laquelle circule un liquide de refroidissement.

Dans un mode de réalisation non représenté de l'invention, il n'y a pas d'entretoise tubulaire et le stator est enserré entre le premier palier et le deuxième palier.

Le stator comprend un corps de stator 9 et un bobinage 8. Le corps de stator 9 comprend par exemple un premier empilage de tôles magnétiques. Par exemple le bobinage 8 comprend des conducteurs électriques dont une partie active passe dans des encoches formées dans le corps de stator 9 et une partie de connexion ou chignon est formée à l'extérieur des encoches. Le bobinage 8 est par exemple un bobinage de type en épingles.

Le rotor 3 est par exemple fixé sur un arbre 4 d'axe de rotation A. L'arbre 4 est guidé en rotation par un premier roulement 11 monté dans le premier palier 5 et un deuxième roulement 12 monté dans le deuxième palier 6. Un élément d'entrainement 13, par exemple une poulie ou un engrenage est fixé à l'arbre 4.

Dans un autre mode de réalisation non représenté, l'arbre 4 est guidé en rotation par rapport au premier palier et au deuxième palier grâce à d'autres moyens de guidage en rotation connus, par exemple des paliers lisses.

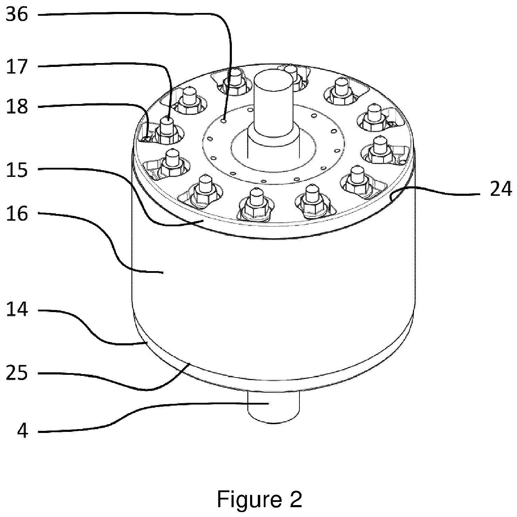

La figure 2 représente le rotor 3 selon un premier mode de réalisation et l'arbre 4. Le rotor 3 comprend un corps de rotor 16. Le corps de rotor 16 s'étend longitudinalement d'une première extrémité 24 du corps de rotor 16 à une deuxième extrémité 25 du corps de rotor 16.

Le rotor 3 comprend en outre un premier ensemble de maintien 15 en appui sur la première extrémité 24 du corps de rotors 16. Le rotor 3 peut également comprendre un deuxième ensemble de maintien 14 en appui sur la deuxième extrémité 25 du corps de rotor 16. Le corps de rotor 16 peut alors être enserré entre le premier ensemble de maintien 15 et le deuxième ensemble de maintien 14.

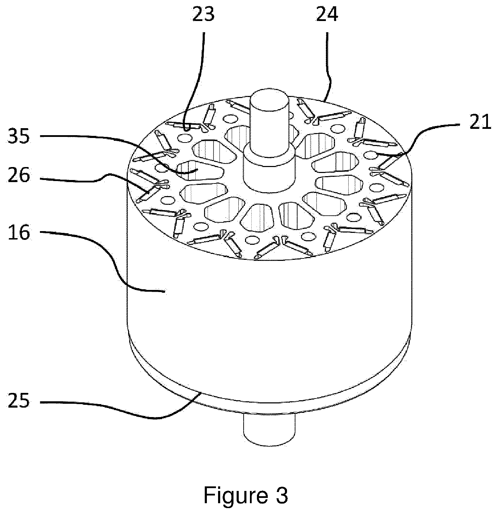

La figure 3 est une vue partielle du rotor 3 et de l'arbre 4. Sur la figure 3, le premier ensemble de maintien 15 n'est pas représenté pour permettre une vue plus détaillée des autres composants du rotor 3.

Des premières cavités 23, par exemple longitudinale, sont formées dans le corps de rotor 16. Le corps de rotor 16 comprend par exemple un deuxième empilage de tôles magnétiques. Le rotor 3 comprend en outre des aimants permanents 26, par exemple longitudinaux, se logeant dans les première cavités 23.

Dans les modes de réalisation de l'invention représentés sur les figures, les aimants permanents 26 comprennent une pluralité d'aimants permanents élémentaires.

Dans un autre mode de réalisation de l'invention non représenté, les aimants permanents comprennent un seul aimant permanent élémentaire.

Un espace de fixation 29 est formé entre au moins une première face 28 d'au moins un des aimants permanents 26 et une deuxième face 27 de l'une des premières cavités 23 dans laquelle l'au moins un aimant permanent 26 est logé. Une résine est insérée dans l'espace de fixation. La résine n'est pas représentée sur les figures pour améliorer la lisibilité des figures. La résine participe à la fixation des aimants permanents 26 dans les premières cavités 23 du corps de rotor 16.

Dans les modes de réalisation de l'invention représentés sur les figures le rotor 3 comprend des pôles magnétiques formés par deux aimants permanents formant une forme en V dans un plan orthogonal à l'axe de rotation.

Dans un autre mode de réalisation de l'invention non représenté, les pôles magnétiques du rotor sont formés par trois aimants permanents formant une forme de U dans un plan orthogonal à l'axe de rotation. Dans un autre mode de réalisation de l'invention non représenté, les pôles magnétiques du rotor sont formés par un aimant en forme de U dans un plan orthogonal à l'axe de rotation.

Dans un autre mode de réalisation de l'invention non représenté, les pôles magnétiques du rotor sont formés par des aimants à magnétisation radiale.

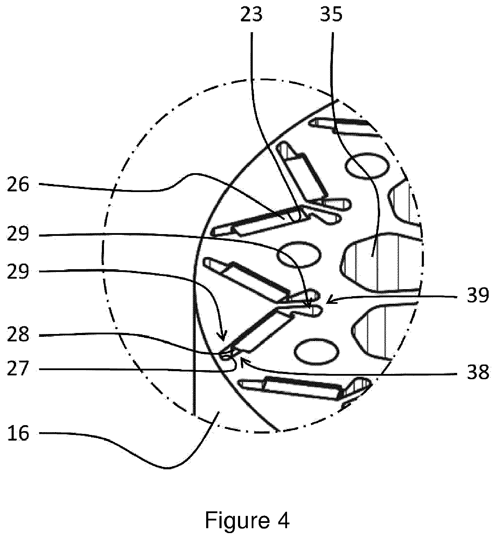

La figure 4 représente un détail de la figure 3 sur lequel est visible l'espace de fixation 29.

L'espace de fixation 29 peut comprendre un premier logement 38 et un deuxième logement 39.

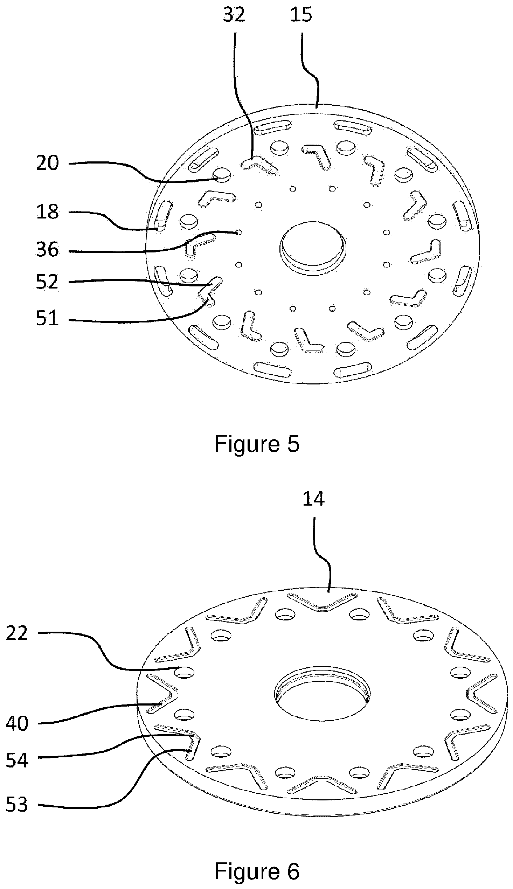

La figure 5 représente le premier ensemble de maintien 15 du rotor 3. Le premier ensemble de maintien 15 comprend un passage d'alimentation 18 communiquant avec l'espace de fixation 29. Le passage d'alimentation 18 est apte à recevoir un dispositif d'alimentation en résine. Le dispositif d'alimentation en résine comprend par exemple une aiguille creuse pénétrant dans le passage d'alimentation 18 lors de l'insertion de la résine. La résine est par exemple insérée sous forme liquide puis polymérisée l'aide d'un dispositif chauffant.

Le premier ensemble de maintien comprend en outre un évent 32 communiquant avec l'espace de fixation 29. L'évent 32 permet l'évacuation d'un gaz lors de l'insertion de la résine.

Le passage d'alimentation 18 et l'évent 32 sont distincts.

Le passage d'alimentation 18 peut communiquer avec plusieurs espaces de fixations 29. Par exemple, dans les modes de réalisation représentés sur les figure, le passage d'alimentation 18 communique avec deux espaces de fixation 29.

L'évent 32 peut comprendre un premier passage 34 formé dans le premier ensemble de maintien 15. Le premier passage 34 comprend par exemple une première gorge 37 formée dans le premier ensemble de maintien 15. La première gorge 37 est par exemple usinée dans le premier ensemble de maintien 15. Le premier passage 34 comprend une première extrémité 30 qui débouche par exemple dans l'espace de fixation 29.

Le corps de rotor 16 peut comprendre une deuxième cavité 35, par exemple une cavité longitudinale située radialement à l'intérieur des premières cavités 23. Le premier passage 34 peut comprendre une deuxième extrémité 31 débouchant dans la deuxième cavité 35.

L'évent 32 peut comprendre en outre un premier trou 36 traversant le premier ensemble de maintien 15. Le premier trou 36 peut déboucher dans la deuxième cavité 35.

Dans un autre mode de réalisation de l'invention non représenté, l'évent comprend également un premier trou et la deuxième extrémité du premier passage débouche directement dans le premier trou. Dans un autre mode de réalisation de l'invention non représenté, un premier espace, par exemple annulaire est formé entre l'arbre et le premier ensemble de maintien. La deuxième extrémité du premier passage débouche dans le premier espace.

L'évent 32 peut communiquer avec plusieurs espaces de fixation 29. Dans les modes de réalisation de l'invention représentés sur les figures l'évent 32 communique avec deux espaces de fixation 29. Par exemple le premier passage 34 comprend une première portion 51 d'orientation circonférentielle par rapport à l'axe de rotation A et une deuxième portion 52 de liaison avec la deuxième cavité 35. La première portion 51 relie par exemple deux espaces de fixation 29. La première portion 51 et la deuxième portion 52 sont reliées entre elles.

L'espace de fixation 29 peut comprendre un premier logement 38 et un deuxième logement 39. Le premier logement 38 et deuxième logement 39 sont par exemple formés en regard de deux premières faces 28 opposées d'un aimant permanent 26. Le passage d'alimentation 18 peut communiquer avec le premier logement 38 et l'évent 32 peut communiquer avec le deuxième logement 39.

La figure 6 représente le deuxième ensemble de maintien 14 du rotor 3 selon le premier mode de réalisation de l'invention. Le deuxième ensemble de maintien 14 peut comprendre un deuxième passage 40 reliant le premier logement 38 au deuxième logement 39.

Dans le premier mode de réalisation de l'invention, le deuxième passage 40 peut comprendre une deuxième gorge 41 formée dans le deuxième ensemble de maintien 14. La deuxième gorge est par exemple usinée dans le deuxième ensemble de maintien 14.

Le deuxième passage 40 peut également relier plusieurs espaces de fixation 29. Par exemple, dans les modes de réalisation de l'invention représentés sur les figures, le deuxième passage 40 relie deux espaces de fixations 29. Le deuxième passage 40 comprend par exemple une troisième portion 53 reliant le premier logement 38 au deuxième logement 39 ainsi qu'une quatrième portion 54 reliant deux troisième portions.

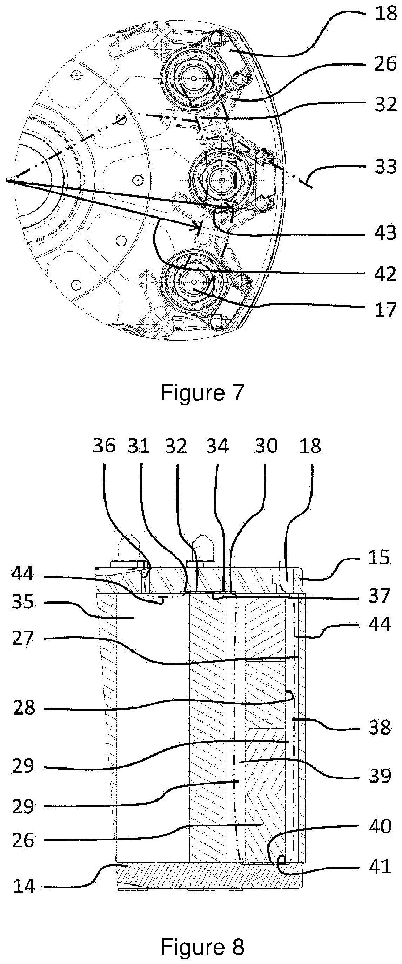

La figure 7 représente une vue de détail du rotor 3.

Le corps de rotor peut comprendre des troisièmes cavités 21 ayant un axe parallèle à l'axe de rotation A et s'étendant entre un premier rayon 42 et un deuxième rayon 43, le premier rayon 42 étant inférieur au deuxième rayon 43. Des tirants 17 peuvent passer dans les troisièmes cavités 21 et dans des deuxième trous 20 du premier ensemble de maintien 15. Les tirants 17 peuvent permettre d'enserrer le corps de rotor 16 entre le premier ensemble de maintien 15 et le deuxième ensemble de maintien 14. Les tirants peuvent également passer dans des troisièmes trous 22 du deuxième ensemble de maintien 14. Les tirants 17 sont par exemple des vis.

Le premier trou 36 et le passage d'alimentation 18 sont par exemple situés chacun radialement à l'intérieur du premier rayon 42 ou à l'extérieur du deuxième rayon 43.

La figure 8 représente une coupe partielle en plans sécants du rotor 3 selon le premier mode de réalisation de l'invention. La coupe est réalisée selon un tracé 33 représenté sur la figure 7.

Cette coupe permet de montrer un trajet 44 suivi par la résine et le gaz lors de l'insertion de la résine dans l'espace de fixation.

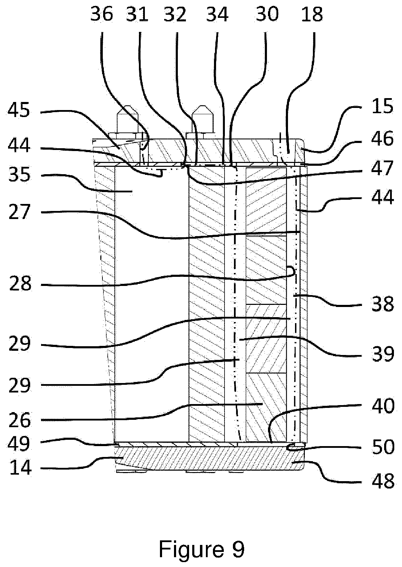

La figure 9 représente une coupe partielle en plans sécants du rotor 3 selon le deuxième mode de réalisation de l'invention. La coupe est, comme celle de la figure 8, réalisée selon un tracé 33 représenté sur la figure 7.

Le deuxième mode de réalisation de l'invention est similaire au premier mode de réalisation de l'invention. Cependant la réalisation du premier ensemble de maintien 15 et du deuxième ensemble de maintien 14 est différente.

Dans le deuxième mode de réalisation de l'invention, le premier ensemble de maintien 15 peut comprendre une première partie d'extrémité 45 et une première partie intermédiaire 46 de forme plate. La première partie intermédiaire 46 est par exemple réalisée dans une tôle. La première partie intermédiaire 46 est par exemple serrée entre la première partie d'extrémité 45 et le corps de rotor 16. Le premier passage comprend une première ouverture 47 traversant une épaisseur de la première partie intermédiaire 46. La première ouverture 47 est par exemple réalisée par découpe.

De même le deuxième ensemble de maintien 14 peut comprendre une deuxième partie d'extrémité 48 et une deuxième partie intermédiaire 49 de forme plate. La deuxième partie intermédiaire 49 est par exemple réalisée dans une tôle. La deuxième partie intermédiaire 49 est par exemple serrée entre la deuxième partie d'extrémité 25 et le corps de rotor 16. Le deuxième passage 40 comprend une deuxième ouverture 50 traversant une épaisseur de la deuxième partie intermédiaire 49. La deuxième ouverture 50 réalisée par découpe.

Dans un autre mode de réalisation de l'invention non représenté, le premier ensemble de maintien est tel que celui décrit pour le premier mode de réalisation de l'invention et le deuxième ensemble de maintien est tel que celui décrit pour le deuxième mode de réalisation de l'invention.

Dans un autre mode de réalisation de l'invention non représenté, le premier ensemble de maintien est tel que celui décrit pour le deuxième mode de réalisation de l'invention et le deuxième ensemble de maintien est tel que celui décrit pour le premier mode de réalisation de l'invention.

## Revendications

1. Rotor (3) pour machine électrique tournante (1), apte à interagir avec un stator (2) de la machine électrique tournante (1) et en rotation par rapport à un axe de rotation (A), le rotor (3) comprenant :
- un corps de rotor (16) comprenant des premières cavités (23) s'étendant d'une première extrémité (24) du corps de rotor (16) à une deuxième extrémité (25) du corps de rotor (16) dans la direction de l'axe de rotation (A),
- des aimants permanents (26) se logeant dans les premières cavités (23), un espace de fixation (29) étant formé entre au moins une première face (28) d'au moins un des aimants permanents (26) et une deuxième face (27) de l'une des premières cavités (23) dans laquelle l'au moins un aimant permanents (26) est logé,
- un premier ensemble de maintien (15) en appui sur la première extrémité (24) du corps de rotor (16),
- une résine insérée dans l'espace de fixation (29),
le premier ensemble de maintien (15) comprenant :
- un passage d'alimentation (18) communiquant avec l'espace de fixation (29), le passage d'alimentation (18) étant apte à recevoir un dispositif d'alimentation en résine,
- un évent (32) communiquant avec l'espace de fixation (29) et apte à permettre l'évacuation d'un gaz lors de l'insertion de la résine,
le passage d'alimentation (18) et l'évent (32) étant distincts,
le corps de rotor (16) comprenant une deuxième cavité (35) et le premier passage comprenant une deuxième extrémité (31) débouchant dans la deuxième cavité (35), l'évent (32) comprenant un premier trou (36) traversant le premier ensemble de maintien (15), et
le premier trou (36) débouchant dans la deuxième cavité (35).

2. Rotor (3) selon la revendication 1 dans lequel l'évent (32) comprend un premier passage (34) formé dans le premier ensemble de maintien (15), une première extrémité (30) du premier passage (34) débouchant dans l'espace de fixation (29).

3. Rotor (3) selon la revendication précédente dans lequel le premier passage (34) comprend une première gorge (37) formée dans le premier ensemble de maintien (15).

4. Rotor (3) selon la revendication 2 dans lequel le premier ensemble de maintien (15) comprend une première partie d'extrémité (45) et une première partie intermédiaire (46) de forme plate, notamment réalisé dans une tôle, serrée entre la première partie d'extrémité (45) et le corps de rotor (16), le premier passage comprenant une première ouverture (47), notamment réalisée par découpe, traversant une épaisseur de la première partie intermédiaire (46).

5. Rotor (3) selon l'une des revendications précédentes dans lequel l'évent (32) communique avec plusieurs espaces de fixation (29).

6. Rotor (3) selon l'une des revendications précédentes comprenant un deuxième ensemble de maintien (14) en appui sur la deuxième extrémité (25) du corps de rotor (16), le premier ensemble de maintien (15) et le deuxième ensemble de maintien (14) enserrant le corps de rotor (16) entre, respectivement, la première extrémité (24) du corps de rotor (16) et la deuxième extrémité (25) du corps de rotor (16).

7. Rotor (3) selon la revendication précédente dans lequel l'espace de fixation (29) comprend un premier logement (38) et un deuxième logement (39), le deuxième ensemble de maintien (14) comprenant un deuxième passage (40) reliant le premier logement (38) et le deuxième logement (39).

8. Rotor (3) selon la revendication précédente dans lequel le passage d'alimentation (18) communique avec le premier logement (38) et l'évent (32) communique avec le deuxième logement (39).

9. Rotor (3) selon l'une des revendications 7 à 8 dans lequel le deuxième passage (40) comprend une deuxième gorge (41) formée dans le deuxième ensemble de maintien (14).

10. Rotor (3) selon l'une des revendication 7 à 8 dans lequel le deuxième ensemble de maintien (14) comprend une deuxième partie d'extrémité (48) et une deuxième partie intermédiaire (49) de forme plate, notamment réalisée dans une tôle, serrée entre la deuxième partie d'extrémité (25) et le corps de rotor (16), le deuxième passage (40) comprenant une deuxième ouverture (50), notamment réalisée par découpe, traversant une épaisseur de la deuxième partie intermédiaire (49).

11. Rotor (3) selon l'une des revendications précédentes dans lequel le passage d'alimentation (18) communique avec plusieurs espaces de fixations (29), notamment deux.

12. Rotor (3) selon l'une des revendications précédentes dans lequel les premières cavités (23) et les aimants permanents (26) ont la direction de l'axe de rotation (A).

13. Rotor (3) selon l'une des revendications 6 à 12 dans lequel le corps de rotor (16) comprend des troisièmes cavités (21) ayant un axe parallèle à l'axe de rotation (A) et s'étendant entre un premier rayon (42) et un deuxième rayon (43),
le rotor comprenant des tirants (17), notamment des vis, passant dans les troisièmes cavités (21) et dans des deuxième trous (20) du premier ensemble de maintien (15), permettant d'enserrer le corps de rotor (16) entre le premier ensemble de maintien (15) et le deuxième ensemble de maintien (14),
le passage d'alimentation (18) étant situé radialement à l'intérieur du premier rayon (42) ou à l'extérieur du deuxième rayon (43).

14. Rotor (3) selon la revendication 13 dans lequel le premier trou (36) est situé radialement à l'intérieur du premier rayon (42) ou à l'extérieur du deuxième rayon (43).

15. Machine électrique tournante (1) comprenant un rotor (3) selon l'une de revendications précédentes et un stator (2).
